# EUROPEAN PATENT APPLICATION

(11) **EP 1 646 152 A2**
(43) Date of publication of application: **12.04.2006**
(21) Application number: 05292066.7
(22) Date of filing: 05.10.2005
(51) Int. Cl.: H04B 1/16

(54) **Selecting either broadcast program or mobile communications information or both to display in a mobile terminal**

(30) Priority: 05.10.2004 KR 2004079146
(71) Applicant: LG Electronics, Inc., Seoul 150-875 (KR)
(72) Inventor: Kim, Jin-Gyeong, c/o 519-1102 Samsung 5-cha Apt., Yongin-si, Gyeonggi-do (KR); Song, Seung Chul, c/o 1307-103, Jugong Apt., Gwangmyeong-si, Gyeonggi-do (KR)
(74) Representative: Loisel, Bertrand

(57) **Abstract**

A terminal for reception of both mobile telecommunications and broadcast programs. The selection of whether broadcast programs or mobile telecommunications related information is displayed is performed in a power path unit in the broadcast program receiving chip. When no broadcast program is being received the mobile telecommunications related information passes through the power path unit and the rest of the broadcast program receiving chip is turned off. When broadcast program is being received the rest of the broadcast program receiving chip is turned on and the broadcast program information alone can be displayed. Alternatively the broadcast program information can be displayed along with the mobile telecommunications related information.

## Description

This application claims the benefit of the Korean Patent Application No. 10-2004-0079146, filed on October 5, 2004, which is hereby incorporated by reference as if fully set forth herein.

### BACKGROUND OF THE INVENTION

### Field of the Invention

The present invention relates to a mobile terminal, and more particularly, to a power path apparatus of a mobile terminal and a method thereof. Although the present invention is suitable for a wide scope of applications, it is particularly suitable for adjusting the path of a power required for displaying a menu image of a mobile terminal and a broadcast program image in a display unit capable of receiving broadcast programs.

### Discussion of the Related Art

The digitalization of broadcast programs is in progress at a fast rate through the conventional media, such as ground wave, satellite and cable televisions (TV), thereby bringing about an innovation in the environment of the broadcast industry. Among such variety of broadcast media, digital media broadcasting (DMB) services are being newly introduced as a means for representing the innovative flow of combining the digitalization of broadcasting services with telecommunication services. One of the major characteristics of the DMB service is allowing a user to view television broadcast programs while the user is under a mobile state or traveling. Such DMB services may be realized when combined with mobile telecommunication terminals (hereinafter referred to as mobile terminals).

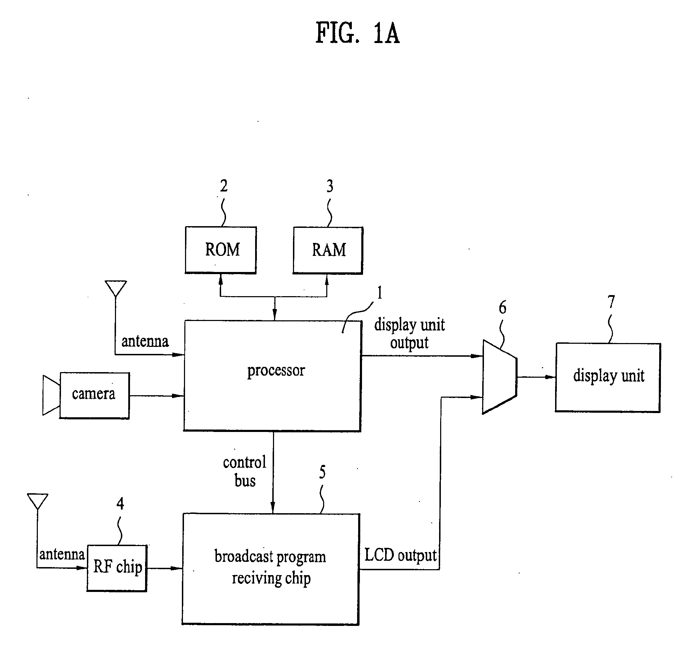

A related art DMB mobile terminal will now be described with reference to FIG. 1A. Referring to FIG. 1A, the related art DMB mobile terminal includes a processor 1, a DMB program receiving chip 5, and a display unit 7. The processor 1 realizes the functions of a mobile terminal, and the display unit 7 displays the received DMB program onto a screen. More specifically, the processor 1 is a component that performs an overall control of the mobile terminal, thereby acting as a general processor. However, the processor 1 of the related art DMB mobile terminal also performs various functions required in a mobile terminal. For example, the processor 1 performs a variety of other functions of receiving and processing outputs received from a camera, outputting an image on the mobile terminal, outputting ring tones of a mobile phone, and so on.

The DMB program receiving chip 5 is controlled by the processor 1 so as to decode a DMB broadcast signal. The DMB program receiving chip 5 then outputs the decoded signal, thereby allowing the display unit 7 to display the received DMB program onto the screen. Herein, a multiplexer 6 is included, which selects one of the output of the processor 1 transmitted to the display unit 7 and the output of the DMB program receiving chip 5 transmitted to the display unit 7. The multiplexer 6 then displays the selected output to the display unit 7.
The source of the image that is displayed to the display unit 7 includes the output of the processor 1, which performs the conventional functions of a general mobile terminal, and the output of the DMB program. More specifically, the multiplexer 6 is included in the mobile terminal, since only one of the two outputs should be selected and displayed to the display unit 7. Thus, the number of devices that are physically used within the mobile terminal increases. Eventually, the size of the mobile terminal becomes larger, and a greater amount of power is used (or consumed).

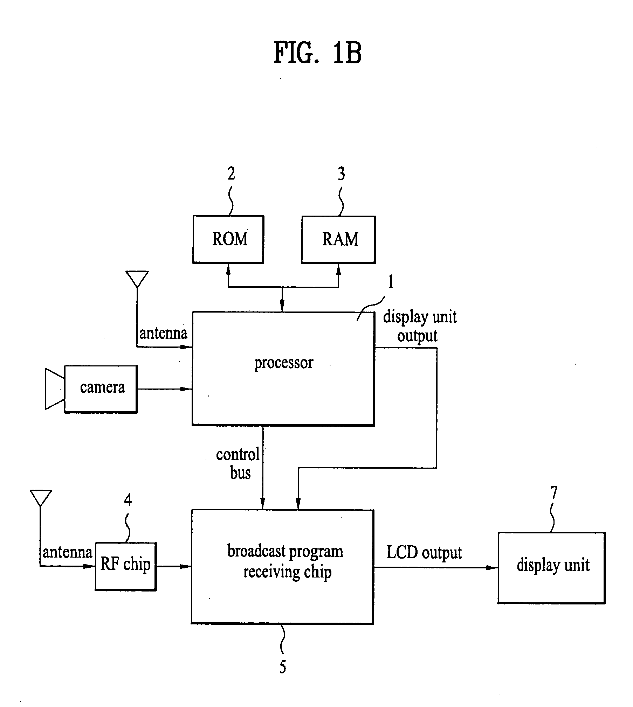

In order to resolve the above-described problem, the output of the processor 1, which is transmitted to the display unit 7, may be received by the DMB program receiving chip 5, as shown in FIG. 1B. More specifically, referring to FIG. 1B, display can be performed only from the DMB program receiving chip 5 to the display unit 7.
And, the DMB receiving chip 5 reconfigures a mobile terminal image of the processor 1 and the DMB program image to a single image (or picture). However, in this case, power should always be supplied to the DMB program receiving chip 5 even when the DMB program is not being received by the mobile terminal, thereby causing an increase in power consumption.

### SUMMARY OF THE INVENTION

Accordingly, the present invention is directed to a power path apparatus and method of a mobile terminal that substantially obviate one or more problems due to limitations and disadvantages of the related art.

An object of the present invention is to provide a mobile terminal that can receive an output of a display unit within a processor from a broadcast program receiving chip and then transmit the received output to a display unit.

Another object of the present invention is to provide a power path apparatus that is included in a broadcast program receiving chip of a mobile terminal and that can select one of a power performing the original functions of the mobile terminal and a power receiving a broadcast program and, then, pass the selected power.

A further object of the present invention is to provide a power path method that can turn off the power of a broadcast signal processor so as to reduce power consumption, when a broadcast program is not being received.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, in a mobile terminal including a broadcast program receiving chip and performing original functions of a mobile terminal and broadcast program receiving functions, the mobile terminal includes a processor controlling the entire mobile terminal and performing original functions of the mobile terminal, a power path unit receiving outputs from the processor that are to be transmitted to a display unit, the outputs corresponding to the original function of the mobile terminal, and selecting one of a power operating the original functions of the mobile terminal and a power required for displaying a broadcast program, in accordance with a value inputted to the broadcast program receiving chip, so as to pass the selected power, a broadcast signal processor decoding and outputting a broadcast signal, and a display unit displaying an image by the power passed from the power path unit.

In another aspect of the present invention, in a mobile terminal including a broadcast program receiving chip having a broadcast signal processor, a display unit displaying an image, and a CPU processor controlling the broadcast program receiving chip and the display unit, a power path apparatus within the broadcast program receiving chip includes an OR gate receiving a power down conversion command signal and a bypass signal from the broadcast program receiving chip, so as to output a select signal, a first multiplexer multiplexing an address signal and control signal received from the CPU processor and an image output signal received from the broadcast signal processor, a second multiplexer multiplexing data received from the broadcast signal processor and data received from the display unit, and a third multiplexer multiplexing data of the CPU processor and display unit output data received from the broadcast signal processor.

In a further aspect of the present invention, a power path method includes receiving an output signal for displaying original functions of a mobile terminal, receiving an output signal for displaying a broadcast signal, selecting at least one of a power for displaying the original functions of the mobile terminal and a power for displaying the broadcast signal, and passing the selected power for displaying the corresponding signal.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiments of the invention and together with the description serve to explain the principle of the invention. In the drawings:

FIGs. 1A and 1B illustrate a related art mobile terminal;

FIG. 2 illustrates a broadcast program receiving chip of a mobile terminal according to the present invention;

FIG. 3 illustrates a power path apparatus of the broadcast program receiving chip according to the present invention;

FIG. 4 illustrates the power path apparatus according to a first embodiment of the present invention;

FIG. 5 illustrates the power path apparatus according to a second embodiment of the present invention; and

FIG. 6 illustrates the power path apparatus according to a third embodiment of the present invention.

### DETAILED DESCRIPTION OF THE INVENTION

Reference will now be made in detail to the preferred embodiments of the present invention, examples of which are illustrated in the accompanying drawings.
Wherever possible, the same reference numbers will be used throughout the drawings to refer to the same or like parts.

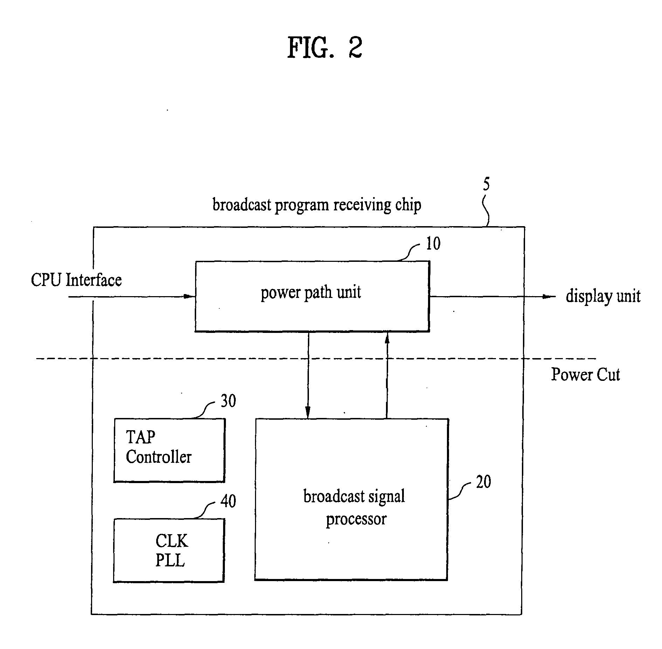

FIG. 2 illustrates a broadcast program receiving chip of a mobile terminal according to the present invention. Referring to FIG. 2, a mobile terminal for receiving broadcast programs includes a central processing unit (CPU) processor 1, a broadcast program receiving chip 5, and a display unit 7. The CPU processor 1 realizes the functions of the mobile terminal. The broadcast program receiving chip 5 receives outputs transmitted from the CPU processor 1 to the display unit 7 and also processes signals for receiving broadcast programs. The display unit 7 then displays images that have been created accordingly.

The broadcast program receiving chip 5 includes a power path unit 10 and a broadcast signal processing unit 20. In accordance with a value inputted from an external source, the power path unit 10 either passes the power for operating the original functions of a general mobile terminal or passes the power required for a broadcast program. The broadcast signal processing unit 20 receives a broadcast program and decodes the received program. Herein, an input of the power path unit 10 is inputted by a CPU interface. The CPU interface is a path that either enables a CPU outside of the broadcast program receiving chip 5 (i.e., an external CPU) to perform and overall control of the broadcast program receiving chip 5, or directly accesses the display unit.

The path outputted from the display unit 7 through the power path unit 10 is an address path and a data path enabling the broadcast program receiving chip 5 to operate a memory mapped display unit. And, the path transmitted from the power path unit 10 to the broadcast signal processor 20 allows the external CPU to control the broadcast signal processor 20 through the CPU interface. Furthermore, a path from the broadcast signal processor 20 to the power path unit 10 enables the broadcast signal processor 20 to display the received broadcast image to the display unit 7.

Since a display unit interface is similar to a general SRAM interface, the above-described paths consist of address, data and control signals. Power cutting divides the power to a power required when using a general mobile terminal and to a power required in the broadcast program receiving chip 5. Therefore, when using the functions of the general mobile terminal, only the power path is turned on and the remaining portion of the power corresponding to the broadcast program receiving chip 5 is turned off. In order to perform power cutting, a supplied power pin of the broadcast program receiving chip 5 is divided into two groups.

When a broadcast program is received and displayed on the display unit 7, the CPU interface controls the broadcast signal processor 20 through the path from the power path unit 10 to the broadcast signal processor 20. Then, the broadcast image that is outputted through the path from the broadcast signal processor 20 to the power path unit 10 is displayed on the display unit 7. On the other hand, when the broadcast program is not received, the CPU interface turns off the portion of the power that has been outputted to the display unit through the power path unit 10 and connected to the broadcast program. Accordingly, a general menu screen of the mobile terminal is displayed on the display unit 7. And, since the power consumption of the broadcast program receiving chip 5 is approximate to '0', consumption of the electric power can be minimized.

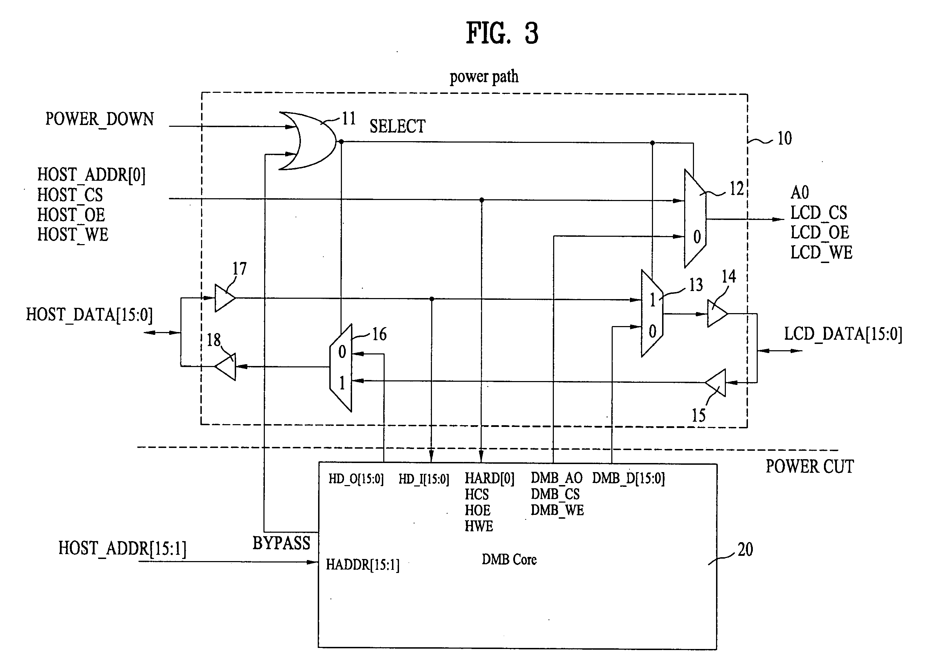

FIG. 3 illustrates a detailed structure of the power path apparatus shown in FIG. 2. The power path unit is formed within the broadcast program receiving chip 5. Herein, the power path unit 10 includes an OR gate, a first multiplexer, a second multiplexer, and a third multiplexer. The OR gate receives a power down conversion command signal and also receives a bypass signal from the broadcast signal processor 20, so as to output a select signal. The first multiplexer multiplexes the address signal and control signal received from the CPU processor and the image output signal received from the broadcast signal processor 20. The second multiplexer multiplexes data received from the broadcast signal processor 20 and data received from the display unit. Finally, the third multiplexer multiplexes data received from the CPU processor and display unit output data received from the broadcast signal processor.
The CPU interface consists of HOST_ADDR, HOST_CS, HOST_OE, HOST_WE, and HOST_DATA. The LCD (display unit) consists of AO, LCD_CS, LCD_OE, LCD_WE, and LCD_DATA.

A power_down pin is used to command a conversion to a pass down mode from an external source.
The bypass signal received from the broadcast signal processor enables the CPU to access the display unit through the power path during the operation of the broadcast program receiving chip. The OR gate 11 creates a select signal with these two signals (i.e., the power_down pin (or power down conversion command signal) and the bypass signal). When the select signal is '1', the mobile terminal is in an image display mode of a general mobile terminal. And, when the select signal is '0', the mobile terminal is in a mode wherein the output image of the broadcast signal processor is displayed on the display unit.

And, as described above, the first multiplexer 12 multiplexes the address and control signals received from the external CPU and the output signal of the general mobile terminal function received from the broadcast signal processor 20. The second multiplexer 16 multiplexes the host data received from the broadcast signal processor 20 and the data received from the display unit. The third multiplexer 13 multiplexes the CPU data and the LCD data received from the broadcast signal processor 20. In the general mobile terminal mode, AO is the only address that is transmitted to the display unit. Therefore, only the CPU address AO is inputted to the power path unit 10. The remaining addresses are directly inputted to the broadcast signal processor 20.

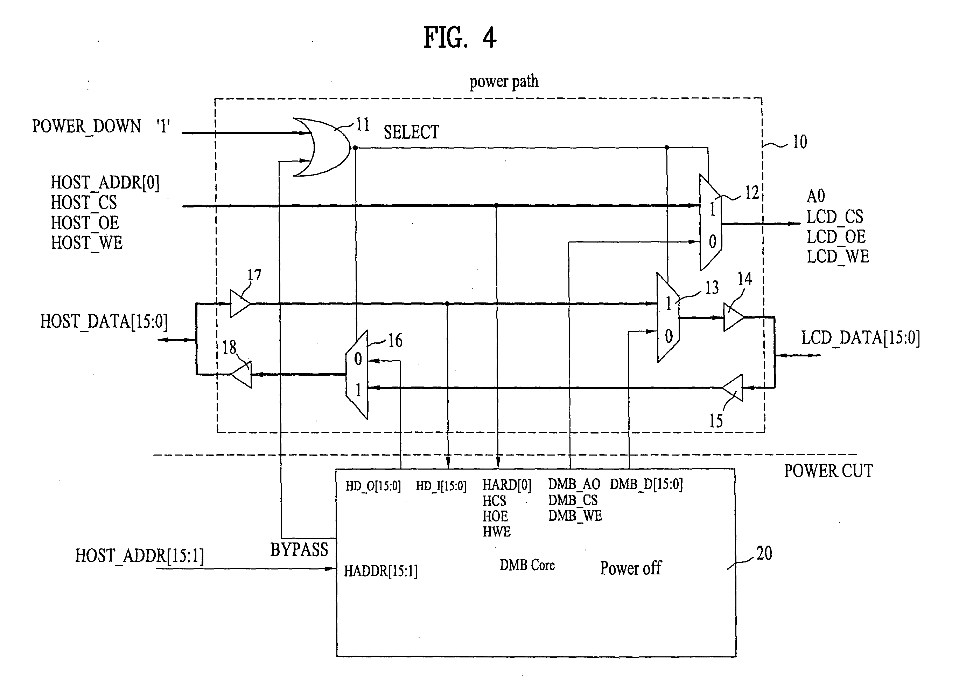

FIG. 4 illustrates the operations of the power path unit shown in FIG. 3 according to a first embodiment of the present invention. In this embodiment, the mobile terminal performs its general functions and does not receive any broadcast program. In this case, the power of the broadcast signal processor 20 is turned off. And, the external CPU directly operates the display unit through the power path unit, so as to display the mobile terminal menu screen on the display unit. From an external means, the power_down pin is set to '1' and the power of a broadcast program receiving core is turned off. The first multiplexer 12 transmits the control signal received from the CPU to the display unit. And, the second multiplexer 16 and the third multiplexer 13 connect the CPU data and the display unit data to one another. Since the power of the broadcast signal processor portion within the broadcast program receiving chip is turned off, the power for the corresponding function is not consumed. In other words, only the power of the power path connected with the operations of the general mobile terminal functions is consumed. In addition, since the display unit data is bi-directional, the external CPU may either read or write the data from the display unit.

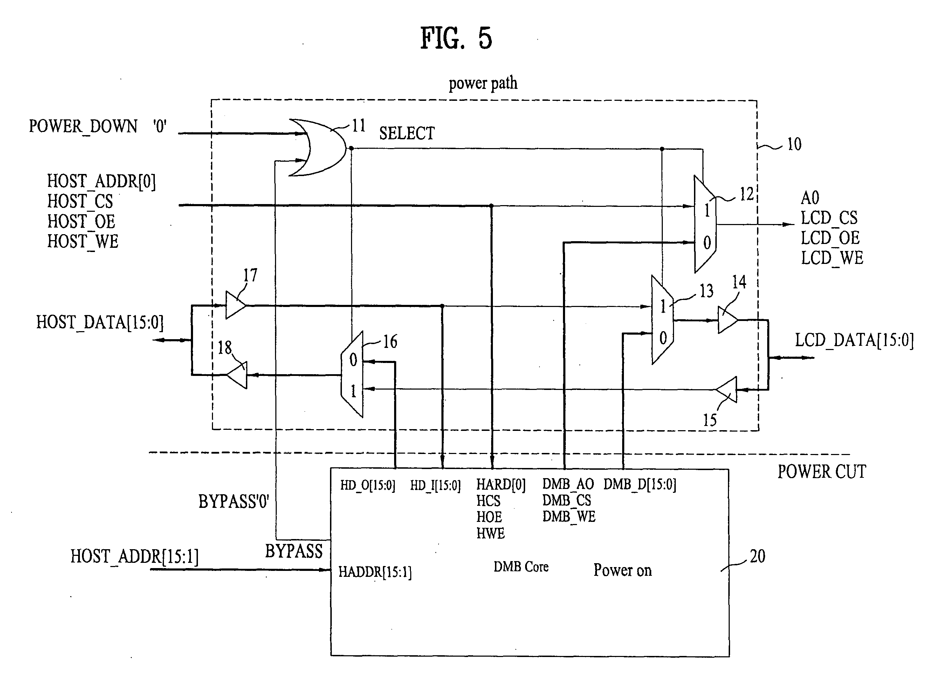

FIG. 5 illustrates the operations of the power path unit shown in FIG. 3 according to a second embodiment of the present invention. In this embodiment, the mobile terminal receives broadcast programs and displays the received program onto a screen of the display unit. In this case, the power of the broadcast signal processor 20 is turned on. From an external means, the power_down pin is set to '0', and then power is applied to the broadcast signal processor 20. Thereafter, the received broadcast image is outputted from the broadcast signal processor 20. Subsequently, the corresponding control signal is transmitted to the display unit through the first multiplexer 12, and the corresponding data is transmitted to the display unit through the third multiplexer 13.

The control signal and data received from the CPU are connected to the broadcast signal processor 20 in order to control the internal structure of the broadcast signal processor 20.

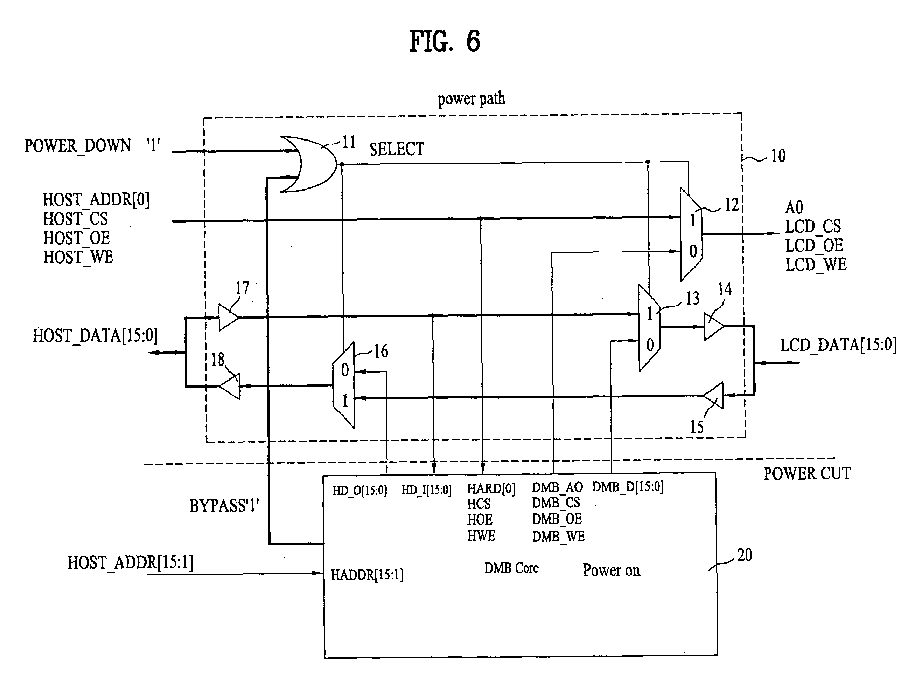

FIG. 6 illustrates the operations of the power path unit shown in FIG. 3 according to a third embodiment of the present invention. In this embodiment, both the broadcast signal image and the image of the general mobile terminal are outputted to the display unit at the same time. In the broadcast program output mode, the bypass signal may be set to '1' through a register within the broadcast signal processor 20 in order to allow the access of the external CPU to the LCD. Accordingly, each of the multiplexers within the mobile terminal function path changes its direction, thereby allowing the external CPU to access the display unit, as in the power-down mode. By using the above-described method, the broadcast image and the menu screen of the mobile terminal may be simultaneously displayed on the screen of the display unit. Moreover, since the broadcast image may be read from the display unit, a desired picture (or image) can be captured during the broadcasting of the received program. Thus, the captured image can be outputted on an idle screen of the mobile terminal or outputted as a printed photograph.

The present invention also provides a power path method including a step of receiving an output signal for displaying original functions of a mobile terminal, a step of receiving an output signal for displaying a broadcast signal, a step of selecting at least one of a power for displaying the original functions of the mobile terminal and a power for displaying the broadcast signal, and a step for passing the selected power of the corresponding signal (or selected signal). At this point, the step of selecting at least one of the power consists of selecting one of a power_down signal and a bypass signal from the OR gate. Herein, the power_down signal decides whether to turn off the power that processes the broadcast signal, and the bypass signal controls the access of the CPU to the display unit.

When the power for displaying the original functions of the mobile terminal is passed, the power for processing the broadcast signal is turned off. Accordingly, by turning off the power for processing the broadcast signal, the amount of the power consumed can be reduced. On the other hand, when the power for outputting the broadcast signal is passed, the power for displaying the original functions of the mobile terminal is also passed due to the bypass signal. Accordingly, the CPU is able to access the display unit even while receiving a broadcast program, thereby enabling the broadcast image and the image for the original functions of the mobile terminal to be displayed through the display unit at the same time.

It will be apparent to those skilled in the art that various modifications and variations can be made in the present invention without departing from the spirit or scope of the inventions. Thus, it is intended that the present invention covers the modifications and variations of this invention provided they come within the scope of the appended claims and their equivalents.

## Claims

1. In a mobile terminal including a broadcast program receiving chip and performing original functions of a mobile terminal and broadcast program receiving functions, the mobile terminal comprising:
a processor controlling the entire mobile terminal and performing original functions of the mobile terminal;
a power path unit receiving outputs from the processor that are to be transmitted to a display unit, the outputs corresponding to the original function of the mobile terminal, and selecting one of a power operating the original functions of the mobile terminal and a power required for displaying a broadcast program, in accordance with a value inputted to the broadcast program receiving chip, so as to pass the selected power;
a broadcast signal processor decoding and outputting a broadcast signal; and
a display unit displaying an image by the power passed from the power path unit.

2. The mobile terminal of claim 1, wherein the power path unit is able to read/write data.

3. The mobile terminal of claim 1, wherein, when the power path unit passes the power operating the original functions of the mobile terminal, so as to drive the display unit, in accordance with the value inputted to the broadcast program receiving chip, a power of the broadcast signal processor is turned off.

4. The mobile terminal of claim 3, wherein, when the power of the broadcast signal processor is turned off, a power of the power path unit and the broadcast signal processor is divided.

5. The mobile terminal of claim 1, wherein, when the broadcast program receiving chip receives the broadcast signal, the power path unit passes the power required for displaying the broadcast program, so as to drive the display unit.

6. The mobile terminal of claim 1, wherein, when the broadcast program receiving chip receives the broadcast signal, the power path unit passes the power required for displaying the broadcast program and the power for operating the original functions of the mobile terminal, so as to drive the display unit.

7. In a mobile terminal including a broadcast program receiving chip having a broadcast signal processor, a display unit displaying an image, and a CPU processor controlling the broadcast program receiving chip and the display unit, a power path apparatus within the broadcast program receiving chip comprising:
an OR gate receiving a power down conversion command signal and a bypass signal from the broadcast program receiving chip, so as to output a select signal;
a first multiplexer multiplexing an address signal and control signal received from the CPU processor and an image output signal received from the broadcast signal processor;
a second multiplexer multiplexing data received from the broadcast signal processor and data received from the display unit; and
a third multiplexer multiplexing data of the CPU processor and display unit output data received from the broadcast signal processor.

8. The apparatus of claim 7, wherein the power for operating the original functions of the mobile terminal is passed, when the select signal is '1', and wherein the power for displaying a broadcast program is passed, when the select signal is '0', the select signal being the output signal of the OR gate.

9. The apparatus of claim 7, wherein the power for operating the original functions of the mobile terminal is passed, when the power down conversion command signal is '1'.

10. The apparatus of claim 7, wherein the power for displaying a broadcast program is passed, when the power down conversion command signal is '0' and when the bypass signal of the broadcast signal processor is '0'.

11. The apparatus of claim 7, wherein both the power for operating the original functions of the mobile terminal and the power for displaying a broadcast program are passed, when the power down conversion command signal is '0' and when the bypass signal of the broadcast signal processor is '1'.

12. The apparatus of claim 7, wherein the CPU processor is able to access the display unit while the broadcast program is being received, when the power down conversion command signal is '0' and when the bypass signal of the broadcast signal processor is '1'.

13. A power path method, comprising the steps of:
receiving an output signal for displaying original functions of a mobile terminal;
receiving an output signal for displaying a broadcast signal;
selecting at least one of a power for displaying the original functions of the mobile terminal and a power for displaying the broadcast signal; and
passing the selected power for displaying the corresponding signal.

14. The method of claim 13, wherein the step of selecting at least one power consists of selecting at least one of a power_down signal and a bypass signal from an OR gate, wherein the power_down signal decides whether to turn off a power for processing the broadcast signal and the bypass signal controls access of the CPU to the display unit.

15. The method of claim 13, wherein the power for processing the broadcast signal is turned off, when the power for displaying the original functions of the mobile terminal is passed.

16. The method of claim 14, wherein, when the power for processing the broadcast signal is passed, the power for displaying the original functions of the mobile terminal is also passed at the same time through the bypass signal.
